(19) Europäisches Patentamt
European Patent Office
Office européen des brevets

(11) **EP 0 727 691 A1**

(12) **EUROPEAN PATENT APPLICATION**

(43) Date of publication:
21.08.1996 Bulletin 1996/34

(51) Int. Cl.$^6$: **G02F 1/139**, G02F 1/1335

(21) Application number: 95400303.4

(22) Date of filing: 14.02.1995

(84) Designated Contracting States:
FR

(71) Applicant: **SAGEM S.A.**
F-75016 Paris (FR)

(72) Inventor: **Welzen, Theo**
NL-6223 AD Maastricht (NL)

(74) Representative: **Fort, Jacques**
**CABINET PLASSERAUD**
**84, rue d'Amsterdam**
**75440 Paris Cedex 09 (FR)**

(54) **Active matrix liquid crystal display device having homogeneously aligned non-twisted liquid crystal configuration and retardation compensation**

(57)    In an active matrix liquid crystal display device the liquid crystal layer (10) has a non-twisted homogeneously aligned configuration while the liquid crystal cell is placed between two crossed polarizers (26,28) having their transmission direction at 45° with respect to the liquid crystal director at the cell-boundary. A negative birefringent retardation film (34,36) is positioned between the liquid crystal cell and one of the polyrizers in such a way that the optical axis of the retardation film is parallel to the liquid crystal boundary director while the absolute value of the retardation of the retardation film is equal to the effective retardation of the liquid crystal layer when no voltage is applied. In a preferred embodiment of the present invention, this one retardation film is replaced by two foils (34,36) of the same type which each have a retardation value which is equal to half the retardation value of the one film and which are placed on one side of the liquid crystal cell with their optical axis' parallel to the liquid crystal boundery-director.

To achieve a bright state at high voltage, the liquid crystal retardation is in the range 0.15-0.35 micron, and preferentially in the range 0.20-0.30 micron.

FIG.7.

**Description**

**BACKGROUND OF THE INVENTION**

The present invention relates to active matrix liquid crystal display devices.

An active matrix liquid crystal device comprises a liquid crystalline material acting as electro-optical medium, which is inserted between two parallel support plates having surfaces facing each other, one of the surfaces being provided with a matrix of transparent conductive blocks (electrodes) and adjacent thin-film transistors, an array of conductive addressing lines and an array of conductive addressing columns, and the other surface being provided with a transparent counterelectrode.

Each transistor has a gate connected to a line, a source connected to a block and a drain connected to a column.

Each block defines a picture element, the conductive block constituting one of the picture element electrodes.

The second opposing electrode of each picture element is provided by the counterelectrode which may be common to all picture elements. The device further comprises a drive circuitry for applying proper voltages across the picture elements.

Display devices of this type are known, using the so-called Normally-Black-Twisted-Nematic (NBTN) mode as electro-optical liquid crystal effect.

With the NBTN effect, the liquid crystal cell described above, is positioned between two polarizers whose polarization (viz., transmission) axis' are mutually parallel while the liquid crystal layer shows a 90° twisted configuration on going from the one cell surface to the other cell surface.

Generally, the 90° twisted configuration is induced from the interaction between the so-called orienting layers, which are deposited on both cell surfaces, and the adjacent liquid crystal boundery layers, the orienting layers being rubbed so as to introduce a uniform alignment of the adjacent liquid crystal parallel to the rubbing direction.

The liquid crystal molecules in the boundery layers may be tilted up to about a few degrees with respect to the cell surfaces. In view of the low tilt-angle, the type of liquid crystal alignment is usually referred to as a homogenous or planar.

To achieve the 9O° twisted configuration, the rubbing directions on both cell surfaces are mutually perpendicular, the nematic liquid crystal being doped with a small amount of cholesteric material having the proper handedness to ensure the correct twist value.

Positioning the polarizers with their polarization axis' parallel to one of the rubbing directions, and choosing the retardation $R_{1c}$ of the liquid crystal layer to be about 0.45 micron -- $R_{1c}$ defined as the product of the liquid crystal layer thickness d and the liquid crystal birefringence dn -- will cause the picture element to be nearly non-transmissive for incident light when no voltage is applied to the element.

This is the dark Field-off state of the NBTN electro-optical effect.

The light-blocking properties of the Field-off state of NBTN can be explained from the "wave-guiding" properties of the liquid crystal configuration which induces a 90° rotation of the polarization direction of the linearly polarized light traversing the liquid crystal layer.

Light leaving the liquid crystal layer is still, more or less, linearly polarized and will therefore be absorbed by the second polarizer.

When a sufficient large voltage is applied across the liquid crystal layer, the liquid crystal molecules will be reoriented in a direction parallel to the electric field. This is the Field-on homeotropic state which no longer leads to a rotation of the polarization direction of the incident light. Consequently, the linearly polarized light will pass unhindered through the liquid crystal layer, and will be transmitted by the second polarizer resulting in a bright Field-on state.

For perpendicular incident light, such liquid crystal devices have satisfying contrasts (defined as the ratio of Field-on and Field-off transmission).

However, at off-normal viewing angles, significant light-leakage occurs in the Field-off state which leads to reduced contrast values. Moreover, colouration phenomena attend the off-normal light-leakage, the colouration being also dependent on the azimuthal viewing direction. And even for perpendicular incident light, the dark Field-off state will not be colour-neutral (viz., black) since the 90° twist configuration does not act as a perfect "wave-guide" without affecting the polarization state of the light. Actually, the light leaving the liquid crystal layer is no longer linearly polarized but has become elliptically polarized. The degree of ellipticity is wavelength dependent which gives the light transmitted by the second polarizer, though low in intensity, a coloured appearance.

SUMMARY OF THE INVENTION

It is an object of the present invention to provide a display device of the type described in the "BACKGROUND OF THE INVENTION" where the picture elements can be switched from a black colour-neutral Field-off state to a bright Field-on state, and where the black Field-off state does not lead to light-leakage nor to colouration phenomena at off-normal viewing angles.

Such display device can be achieved when a liquid crystal display architecture is used when the liquid crystal layer has a non-twisted homogeneously aligned configuration, (viz., parallel rubbing directions on both cell surfaces), and where the two polarizers are mutually crossed and positioned with their polarization axis' at 45° with respect to the rubbing directions on the cell surfaces.

The display device is further provided with a negative birefringent uniaxial compensating medium (film) whose optical axis is parallel to the rubbing directions and parallel to the cell surfaces. The (absolute) value of the retardation $R_{coap}$ of the compensating medium is chosen to be equal to the effective liquid crystal retardation in the Field-off state. The negative birefringent compensating film can be positioned between the liquid crystal layer and one of the polarizers. In a preferred embodiment of the present invention, this one compensating retardation film is replaced by two foils of the same type which each have a retardation value which is equal to half the retardation value of the one film and which are placed on one side of the liquid crystal cell with their optical axis' parallel to the projection direction of the liquid crystal director on the cell surfaces.

The invention is based on the finding that a non-twisted homogeneously aligned liquid crystal layer, with tilt-angle equal to zero, can be represented as a positive birefringent uniaxial film having its optical axis parallel to the cell surfaces and parallel to the rubbing directions, while the combination of such film with a second negative birefringent uniaxial film whose optical axis is parallel to the cell surfaces and parallel to the optical axis of the said positive birefringent film will behave as an optically isotropic medium provided the retardation of the said positive birefringent film is equal to the (absolute value of the) retardation of the said negative birefringent film. Said combination of positive and negative birefringent films, when positioned in between crossed polarizers, will not alter the light transmission characteristics of the crossed polarizers alone. Therefore, depending on the polarizing efficiency of the polarizers and depending on its spectral light-transmission characteristics, a viewing angle independent black state can be obtained with said combination of positive and negative birefringent films between crossed polarizers.

To achieve a bright Field-on state with the display device of the present invention having the architecture as described above, it appears that the mutually crossed polarizers are best being positioned at 45° with respect to the rubbing directions on the cell surfaces while the liquid crystal retardation $R_{1c}$ is in the range 0.15 - 0.35 micron, and preferentially in the range 0.20 - 0.30 micron.

BRIEF DESCRIPTION OF THE DRAWINGS

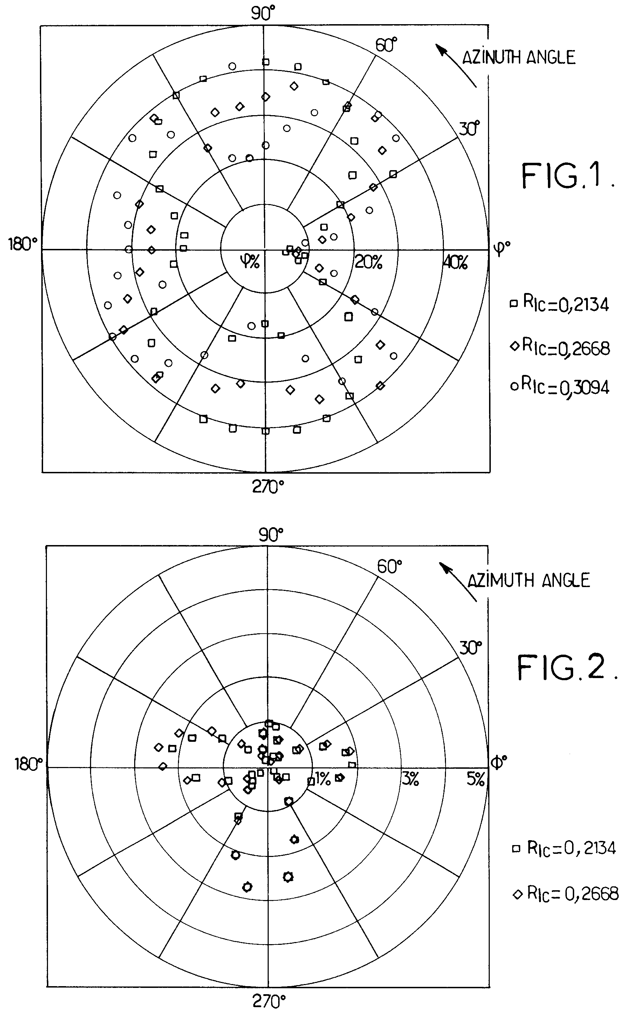

Fig. 1 is a graph giving the transmission as a function of the azimuthal viewing angle at a fixed off-normal viewing angle of 60° for the bright Field-on state of a liquid crystal display device of the present invention using a single negative birefringent compensating film, the radial transmission scale being from 0 to 50% and the azimuth angle form 0° to 360°; three curves are shown evaluated with different liquid crystal retardation values $R_{1c}$ viz. 0.2134, 0.2668 and 0.3094.

Fig. 2 gives a transmission as a function of the azimuthal viewing angle at a fixed off-normal viewing angle of 60° for the dark Field-off state of a liquid crystal display device of the present invention using a single negative birefringent compensating film, with a radial transmission scale from 0% to 5% and an azimuth angle from 0° to 360°; two curves are shown with different liquid crystal retardation values, viz. $R_{1c}$ = 0.2134 and 0.2668.

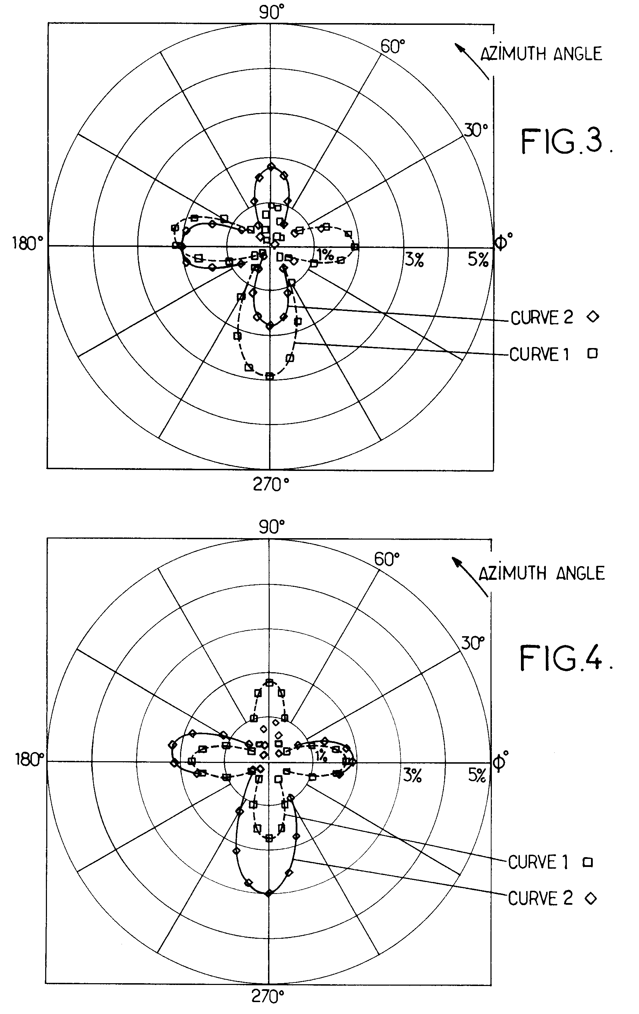

Fig. 3 is a graph giving the transmission as a function of the azimuth angle at off-normal angle of 60° for the dark Field-off state of a liquid crystal display device of the present invention with $R_{1c}$ = 0.2134 using one compensating negative birefringent film (curve 1) and two compensating negative birefringent foils each placed on one side of the liquid crystal cell (curve 2); the transmission scale is from 0% to 5%.

Fig. 4 gives the azimuthal transmission as an off-normal viewing angle of 60° for two crossed "ideal" polarizers positioned at 45° (curve 1). The transmission scale is from 0% to 5%. Fig. 4 includes the corresponding plot for the dark Field-off state of a liquid crystal device of the present invention with $R_{1c}$ = 0.2134 using one compensating negative birefringent film (curve 2).

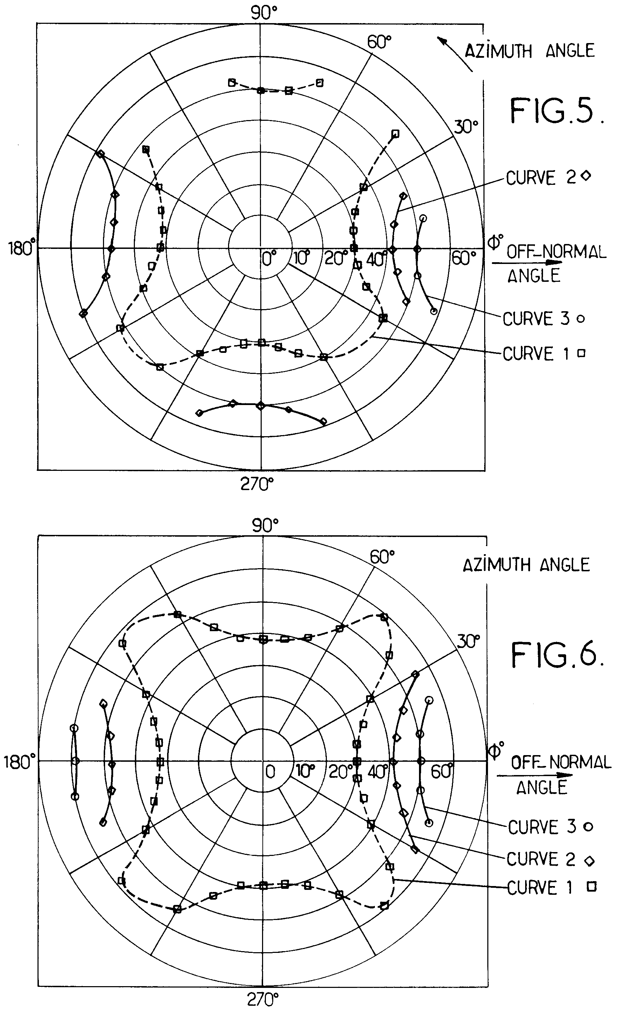

Fig. 5 gives iso-contrast curves for a liquid crystal display device of the present invention with $R_{1c}$ = 0.2134 using one compensating negative birefingent film. Curves are shown for contrast values equal to 100 (curve 1), equal to 25 (curve 2) and equal to 10 (curve 3). The off-normal viewing angle range is from 0° to 60°, while the azimuth angle range is from O° to 360°, as indicated.

Fig. 6, similarly to Fig. 5, gives iso-contrast curves for a liquid crystal display device of the present invention with $R_{1c}$ = 0.2134 using two compensating negative birefringent films, each being positioned on one side of the liquid crystal cell and each having a retardation value equal to $-R_{1c/2}$.

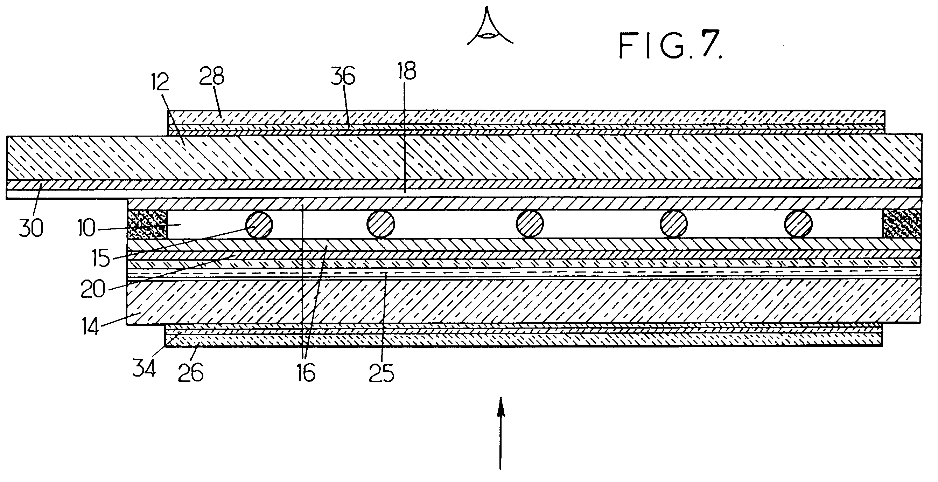

Fig. 7 is a schematic representation of a liquid crystal display device according to a particular embodiment of the present invention.

DETAILED DESCRIPTION OF THE INVENTION

The present invention will be described and explained below by means of computational results from modelling studies on a non-twisted homogeneously aligned liquid crystal layer with surface pre-tilt angle equal to 3°; the latter may be considered as typical.

Evaluation of the liquid crystal director profiles as function of the applied voltage across the liquid crystal layer was done with the modelling computer-package DIMOS. DIMOS is a well-known and frequently used simulation package which is commercially available from Autronic-Melchers, Karlsruhe, Germany.

In the computations the liquid crystal material constants of ZLI 3771 are used.

ZLI 3771 is a liquid crystal which is commercially available from Merck, Darmstadt, Germany.

The field-off liquid crystal director profile corresponds with the profile at zero Volt where the liquid crystal is uniformly oriented with tilt-angle of 3° throughout the cell.

The Field-on liquid crystal director profile corresponds with the profile at about 8 Volt where the liquid crystal in the middle of the cell is nearly perpendicularly oriented with respect to the cell surfaces.

The optical calculations were done according to the standard Berreman 4*4 matrix formalism.

In the optical calculations, "perfect" polarizers were used where one of the polarization directions is completely absorbed while the other one is completely transmitted.

The refractive index of the polarizers is chosen to be equal to 1.5 which is considered to be typical.

The standard CIE light source D65 is used.

For the liquid crystal the following wavelength-dependent refractive indices were used:

$$n_e = 1.5682 + 10246/(La)^2,$$

$$n_o = 1.4752 + 6100/(La)^2,$$

where $n_e$ and $n_o$ denote the extra-ordinary and ordinary refractive index, respectively ($n_e$ in the liquid crystal director direction, and $n_o$ perpendicular to it), and La stands for the wavelength of the light.

The birefringence dn of the liquid crystal is equal to ($n_e$-$n_o$), and is, at La = 550 nm, equal to 0.1067.

For the negative birefringent uniaxial foils the following refractive indices are used:

$$n_1 = \text{refractive index along optical axis} = 1.55,$$

$$n_2 = \text{refractive index perpendicular to optical axis} = 1.55.$$

No dispersion was included in the refractive indices of the negative birefringent uniaxial films.

Table I gives the Field-on state optics for perpendicular incident light as function of $R_{1c}$ for the liquid crystal architecture of the present invention where a single negative birefringent uniaxial compensating film is used.

The listed $R_{1c}$-values are achieved by varying the thickness of the liquid crystal layer.

At each $R_{1c}$-value, the retardation $R_{coap}$ of the compensating film is made equal to -$R_{1c}$. This is achieved by properly adjusting the film thickness since $R_{coap} = D_{fila} * (n_1$-$n_2)$, with $D_{fila}$ = thickness of the compensating film; $n_1$ and $n_2$ are the refractive indices, as defined above, of the negative birefringent foil.

In table I, $X_{cie}$ and $Y_{cie}$ denote the CIE 1931 colour coordinates. The luminance is the transmission using the standard light source D65 and taking account of the standard spectral eye-sensitivity curve.

The luminance is expressed in %.

The maximum luminance is, by definition, equal to 50%; this value corresponds with the transmission through two ideal ("perfect") parallel polarizers.

It has been verified that for each $R_{1c}$-value of table I the transmission (viz., luminance) of the Field-off state is indeed equal to zero at normal-incidence light.

TABLE I

| Retardation $R_{1c}$ [micron] | Luminance [%] | $X_{cie}$ | $Y_{cie}$ |
|---|---|---|---|
| O.2134 | 35.23 | 0.287 | 0.308 |
| O.2241 | 36.86 | 0.287 | 0.309 |
| O.2347 | 39.05 | 0.291 | 0.316 |
| O.2454 | 39.94 | 0.296 | 0.316 |
| O.2561 | 41.03 | 0.296 | 0.317 |
| O.2668 | 42.58 | 0.301 | 0.321 |
| O.2774 | 45.16 | 0.307 | 0.329 |
| O.2881 | 44.56 | 0.306 | 0.329 |
| O.2988 | 45.53 | 0.312 | 0.339 |
| O.3094 | 46.57 | 0.317 | 0.341 |
| O.3201 | 44.91 | 0.321 | 0.342 |
| O.3308 | 44.09 | 0.326 | 0.350 |
| O.3521 | 43.75 | 0.337 | 0.368 |
| O.3735 | 41.96 | 0.350 | 0.377 |
| O.3948 | 38.51 | 0.367 | 0.395 |
| O.4161 | 34.54 | 0.383 | 0.410 |
| O.4375 | 30.27 | 0.410 | 0.424. |

Table I shows that the highest luminance values at perpendicular incident light are obtained for $R_{1c}$-values of about 0.3 micron. For these $R_{1c}$-values the colour coordinates listed in table I are quite close to the "white-point" whose colour-coordinates $X_{cie}$ and $Y_{cie}$ are 0.31 and 0.32, respectively.

However, at off-normal viewing angles, significant colouration phenomena and significantly reduced transmissions are observed for $R_{1c}$-values of about 0.3 micron. This is illustrated in table II which shows the transmission (luminance) and the $X_{cie}$ and $Y_{cie}$ colour coordinates at an off-normal angle of 50° in the left-direction for various $R_{1c}$-values. For the non-twisted display device of the present invention, the left (respectively, right) viewing direction corresponds with the azimuthal viewing angle of 90° (respectively, 270°). The zero degree direction is parallel to the rubbing directions at the cell surfaces.

So, left-right viewing directions imply viewing directions in a plane perpendicular to the rubbing directions, while up-down viewing directions are defined in a plane parallel to the rubbing directions.

TABLE II

| Retardation $R_{1c}$ [micron] | Luminance [%] | $X_{cie}$ | $Y_{cie}$ |
|---|---|---|---|
| O.2134 | 44.22 | 0.314 | 0.336 |
| O.2241 | 43.82 | 0.318 | 0.339 |
| O.2347 | 44.13 | 0.324 | 0.351 |
| O.2454 | 43.58 | 0.332 | 0.360 |
| O.2561 | 42.77 | 0.343 | 0.367 |
| O.2668 | 40.16 | 0.348 | 0.377 |
| O.2774 | 39.49 | 0.361 | 0.388 |
| O.2881 | 36.63 | 0.372 | 0.396 |
| O.2988 | 34.27 | 0.387 | 0.407 |
| O.3094 | 31.42 | 0.399 | 0.417 |
| O.3201 | 28.86 | 0.417 | 0.426 |
| O.3308 | 25.74 | 0.433 | 0.433 |
| O.3521 | 19.73 | 0.460 | 0.438 |
| O.3735 | 14.08 | 0.472 | 0.410 |

Table II indicates that in terms of colour-neutrality low $R_{1c}$-values should be preferred since then the $X_{cie}$ and $Y_{cie}$ values at off-normal viewing angles will deviate lesser from the colour coordinates at perpendicular incident light.

This is indeed confirmed for calculated data obtained at other off-normal viewing angles (including other azimuthal angles).

Fig. I illustrates once more the influence of the $R_{1c}$-value on the transmission at off-normal viewing angles for the liquid crystal display device of the present invention where a single negative birefringent film is used.

Fig. I shows the so-called azimlum (azimuthal-luminance) plots at off-normal viewing angle of 60° for the bright Field-on state using three $R_{1c}$-values.

Azimlum plots give in a polar diagram the transmission (radial axis) as function of the azimuthal viewing angle at fixed off-normal viewing angle.

Fig. II shows the azimlum plots of the dark Field-off state for the liquid crystal display device of the present invention where a single negative birefringent film is used.

The radial transmission scale in the plots of Fig. II is from 0% to 5%. the off-normal viewing angle is 60°.

Two curve's are given, one obtained for $R_{1c}$ = 0.2134 and the other for $R_{1c}$ = 0.2668.

Though the combination of the liquid crystal layer and the negative birefringent compensating film of the present invention will act as an optically isotropic medium, such medium will still show some (very low) transmission at large off-normal viewing angles when positioned between crossed "ideal" polarizers. This is due to the small light leakage at large off-normal viewing angles of two crossed "ideal" polarizers alone.

Fig. II shows an asymmetry in the azimlum plots, in particular in the left-right viewing direction.

The left-right asymmetry can be avoided by replacing this one compensating negative birefringent film by two foils of the same type which each have a retardation value being equal of half the retardation value of the one film, and which are placed on one side of the liquid crystal cell with their optical axis' parallel to the projection direction of the liquid crystal director on the cell surfaces. This is illustrated in Fig. III.

Fig. III gives the azimlum plots for $R_{1c}$ = O.2134 of the field-off dark state at off-normal viewing angle equal to 60° for the liquid crystal display device of the present invention using one compensating negative birefingent film (curve 1) and using two films of the same type having retardation values equal to half the $R_{coap}$-value of the one compensating film while being positioned in a manner as described above (curve 2). Similar to Fig. II, the radial transmission scale in Fig. III is from 0% to 5%.

Fig. IV gives the azimuthal transmission at 60° off-normal viewing angle for two crossed "ideal" polarizers (curve 1). As should be, the azimlum plot of the crossed "ideal" polarizers shows the "cross-symmetry"; the polarizers are positioned at 45°. For comparison purposes corresponding azimlum plot of the dark Field-off state of the liquid crystal device of the present invention with $R_{1c}$ = 0.2134 using one negative birefingent film is included in Fig. IV (curve 2).

Fig. IV shows the iso-contrast curve's for liquid crystal device of the present invention with $R_{1c}$ = 0.2134 using one negative birefingent compensating film, the contrast being defined as the ratio of the Field-on state transmission and the Field-off state transmission. Iso-contrast curve's for contrast value's equal to 100 (curve 1), equal to 25 (curve 2) and equal to 10 (curve 3) are evaluated at off-normal viewing angles in the range from 0° to 60° and at azimuth angles in the range from 0° to 360°.

The observed asymmetry in the left-right direction of the curve's given in Fig. V is due to the asymmetry in the dark Field-off state where the transmission in the left-direction (viz., azimuth angle equal to 90°) is smaller than the transmission in the right-direction (viz., azimuth angle equal to 270°); e.g., compare the azimlum plot of the dark Field-off state given in Fig. IV. The relatively small asymmetry in the up-down direction of the curve's given in Fig. V can be understood from the tilt-direction of the homogeneously aligned liquid crystal molecules.

Fig. VI gives the iso-contrast curve's for the liquid crystal device of the present invention with $R_{1c}$ = O.2134 using two compensating negative birefringent films, each being positioned on one side of the liquid crystal cell and each having a retardation value equal to $-R_{1c}/2$.

The contrast values, the off-normal angle and the azimuth angle range in this Fig. VI are the same as in Fig. V. The symmetry in the left-right direction is obvious now.

Fig. VII is a schematic representation of a display device according to a particular embodiment of the present invention. The device has a thin liquid crystal layer 10, being typically some microns thick. The nematic liquid crystal layer 10 is located between two transparent supporting plates 12 and 14, being typically of glass. When no voltage is applied across the liquid crystal layer, the nematic liquid crystal is oriented by a coating (viz., orienting layer) 16. The arrangment is processed for providing a homogeneously aligned non-twisted liquid crystal configuration. This can be achieved, e.g. by properly rubbing the coating 16, the rubbing directions on both surfaces being parallel thereby introducing a non-twisted uniform orientation of the liquid crystal. The distance between the support plates 12 and 14 is maintained by spacers 15. The support plates are provided with electrodes for constituting elementary capacitors, each corresponding with one pixel-(or, display-) element. For instance, the surface of support plate 12 pointing to the liquid crystal layer 10 may carry control electrodes constituting an array 18, the electrodes being connected to thin-film-transistors (TFT's). The TFT's are distributed in rows and columns and are controlled by a circuitry, not shown here, by means of a connecting intermedium 30. The other support plate 14 is provided with a counterelectrode 20 which is typically a thin layer of ITO. To achieve a coloured display device, colour filters 25 may be used, the filters being positioned between the liquid crystal layer 10 and e.g. the transparent support plate 14. The unit (viz., the liquid crystal cell) is placed between crossed polarizers 26 and 28 which have their polarization axis at 45° with respect to the rubbing directions on both surfaces. In a particular embodiment of the device of the present invention two uniaxial negative birefringent films 34 and 36 are placed with their optical axis parallel to the plates 12 and 14 and parallel to the rubbing directions, each of the films is positioned between one of the support plates and the nearest polarizer.

## Claims

1.  Active matrix liquid crystal device comprises a nematic liquid crystal acting as electro-optical medium inserted between two parallel support plates having surfaces facing each other, one of the surfaces being provided with a matrix of transparent conductive blocks and adjacent thin-film-transistors, an array of conductive addressing lines and an array of conductive addressing columns, and the other surface being provided with a transparent counterelectrode;

    the conductive blocks constituting one of the picture element electrodes while the second opposing electrode of each element being provided by the counterelectrode, thus defining a matrix of display elements;

    the device comprising a control circuit for supplying voltage signals to both electrode patterns by means of which the display elements can be switched from a first state to an optically different second state;

    the liquid crystal cell being inserted between two crossed (or nearly crossed) polarizers,
    characterized in that:

    the liquid crystal layer has a non-twisted homogeneously aligned configuration when no voltage is applied across the liquid crystal layer.

2.  Display device according to claim 1, characterized in that the transmission directions (or polarization directions) of the said polarizers form an angle of 45° (or virtually equal to 45°) with respect to the liquid crystal director on the support plates.

3.  Display device according to Claim 1 or 2, characterized in that at least one retardation film having a negative retardation value is placed between polarizers and liquide crystal cell in such a way that the optical axis of the retardation film is parallel (or virtually parallel) to the projection of the liquid crystal director on the support plates and in that the optical axis of the retardation film is parallel (or virtually parallel) to the support plates.

4. Dispplay device according to Claim 3, characterized in that the absolute value of the retardation of the retardation film is equal (or virtually equal) to the effective retardation value of the liquid crystal layer when no voltage is applied across the liquid crystal layer.

5. Display device according to any one of Claims 1-4, characterized in that, if a plurality of said retardation films is used, on both sides of the liquid crystal cell a number of retardation films is placed in such a way that the total retardation of the films on the one side of the cell is substantially equal to the total retardation of the films on the other side.

6. Display device according to any preceding Claim, characterized in that the retardation of the liquid crystal, defined as the product of the liquid crystal layer thickness and the liquid crystal birefringence, is in the range 0.15 - 0.35 micron, and preferentially in the range 0.20 - 0.30 micron.

7. Display device according to any preceding Claim, characterized in that the tilt-angle of the liquid crystal molecules in the boundery layers of the liquid crystal cell is smaller than 25°, and preferentially smaller than 5°.

FIG.1.

FIG.2.

FIG.3.

FIG.4.

FIG.5.

FIG.6.

# FIG.7.

EP 0 727 691 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 459 554 (PHILIPS NV) 4 December 1991 | 1,2,7 | G02F1/139 G02F1/1335 |
| Y | * page 2, paragraph 1 * <br> * page 3 * | 3-5 | |
| Y | EP-A-0 616 240 (SHARP KK) 21 September 1994 <br> * column 4, line 24 - column 6, line 26; figures 1,14 * | 3-5 | |
| A | EP-A-0 290 301 (COMMISSARIAT ENERGIE ATOMIQUE) 9 November 1988 <br> * column 9, last paragraph - column 10, paragraph 1; claims 1,2; figure 6 * | 1,5 | |
| A | LASER DIODE TECHNOLOGY AND APPLICATIONS, LOS ANGELES, CA, USA, 18-20 JAN. 1989, vol. 1043, ISSN 0277-786X, PROCEEDINGS OF THE SPIE - THE INTERNATIONAL SOCIETY FOR OPTICAL ENGINEERING, 1989, USA, CASSARLY B ET AL 'Phase control of coherent diode laser arrays using liquid crystals' <br> * abstract; figures 1,3 * | 1 | TECHNICAL FIELDS SEARCHED (Int.Cl.6) <br><br> G02F |

The present search report has been drawn up for all claims

| Place of search | Date of completion of the search | Examiner |
|---|---|---|
| THE HAGUE | 11 July 1995 | Wongel, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13